# EUROPEAN PATENT APPLICATION

(11) **EP 3 835 717 A1**
(43) Date of publication of application: **16.06.2021**
(21) Application number: 19215125.6
(22) Date of filing: 11.12.2019
(51) Int. Cl.: G01B 9/02, G01J 9/02, G01N 21/27

(54) **WAVELENGTH REFERENCE UNIT AND INTERFEROMETRIC MEASURING DEVICE**

(71) Applicant: TAYLOR HOBSON LIMITED, Leicester LE4 9JQ (GB)
(72) Inventor: AM WEG, Christian, 64289 Darmstadt (DE); MAY, Thilo, 64287 Darmstadt (DE); EISWIRT, Peter, 55129 Mainz (DE)
(74) Representative: Weilnau, Carsten

(57) **Abstract**

The disclosure relates to a wavelength reference unit for an interferometric measuring device, the wavelength reference unit comprising:
- an elongated light-transmissive reference body comprising a first end and a second end,
- a first reflector arranged at the second end and facing towards an interior of the reference body,
- a reference head configured to be coupled with a light source for receiving a master beam from the light source, the reference head being configured to split the master beam into a master signal beam and a master reference beam and to direct the master signal beam towards the first end, wherein the reference head is aligned relative to the reference body such that the master signal beam enters the reference body at the first end and propagates towards the second end,
- wherein the reference head is configured to capture at least a portion of the master signal beam reflected by the first reflector and to provide the reflected portion of the master signal beam and the master reference beam to a reference detector.

## Description

### Field

The present disclosure relates to a wavelength reference unit for an interferometric measuring device. In another aspect the disclosure relates to an interferometric measuring device equipped with a wavelength reference unit. In still another aspect the disclosure relates to a method of correcting a distance measurement provided by an interferometric measurement device, in particular by making use of a wavelength reference unit. In still another aspect the disclosure relates to a computer program configured and operable to correct a distance measurement provided by an interferometric measurement device by making use of a wavelength reference unit.

### Background

Interferometric measuring devices are commonly known for providing a precise measurement of a surface of an object. Generally, a measurement beam provided by a light source is split in a signal beam and a reference beam. While the signal beam is directed to and reflected by an object the reference beam propagates along a predefined reference path. The reference beam and the signal beam reflected by the object are recombined and the resulting interference pattern is indicative of a phase shift between the reflected signal beam and the reference beam. As such and by interferometry the phase shift between a signal beam and a reference beam can be precisely determined.

In order to obtain a quantitative measurement, e.g. in order to determine a surface profile or a topology of a surface of an object it is necessary to transfer the phase shift as determined by the interference into a distance or length difference. For this it is of particular importance, that the wavelength of the measurement beam is precisely known. In addition, during an interferometric measurement the wavelength of the measurement beam should be rather constant and stable.

Especially with low cost light sources, such as with some laser light sources the wavelength of the emitted laser radiation is subject to certain fluctuations in terms of wavelength. Such fluctuations might be due to varying environmental conditions. In particular, the wavelength or a wavelength fluctuation of a laser light source might be rather sensitive with regard to the ambient temperature. Moreover, during operation of a light source and/or during operation of an interferometric measuring, thermal energy may be released in a rather uncontrolled way that may lead to a frequency or wavelength shift of the measurement beam emitted by the respective light source. In addition, varying ambient parameters, such as temperature, air pressure and/or humidity may also have a certain impact on the optical path length of the interferometric setup, especially along a reference path and/or along a signal path.

Document US 4 984 898 A discloses a laser interferometer for interferometric linear measurement comprising a semiconductor laser energizing a measuring interferometer with which there is coordinated a spatially directly adjacent reference interferometer. There, an output signal of a reference signal detector of the reference interferometer is used to effect in the event of changes in the refraction index of the medium occupying the reference section and the measuring section in a frequency tuning of the semiconductor laser in such a way that the wavelength acting as a length normal will be kept constant in the reference interferometer and the measuring interferometer.

An active frequency tuning of a semiconductor laser is rather elaborate and difficult to control. Moreover, the stability of the frequency tuning might be always subject to certain fluctuations.

In view of this it is an object of the present disclosure to provide an improved interferometric measuring device, wherein a wavelength or frequency drift of a light source can be compensated or corrected in a durable and precise way. The improvement to the interferometric measuring device should be easily implemented with existing interferometric measuring devices. It is hence a demand to retrofit existing interferometric measuring devices with a means to compensate an undesired but inevitable drift of frequency or wavelength of the light source over time. It is a further demand to provide a respective method of correcting a distance measurement provided by an interferometric measurement device, which is easily implementable with a minimum of hardware modifications. It is a further aim to provide a wavelength reference unit operable to correct or to compensate for frequency or wavelength fluctuations of a light source of an interferometric measuring device.

### Summary

The above mentioned objects and demands will be solved by a wavelength reference unit, by an interferometric measuring device and by a method of correcting a distance measurement provided by an interferometric measuring device in accordance to the features of the independent claims. Further effects and benefits are subject matter of the respective dependent claims.

In one aspect there is provided a wavelength reference unit for an interferometric measuring device. The wavelength reference unit comprises an elongated light-transmissive reference body. The reference body comprises a first end and a second end. The wavelength reference unit further comprises a first reflector. The first reflector is arranged at the second end of the reference body. The first reflector faces towards an interior of the reference body. Typically, a reflective surface of the first reflector faces towards the interior of the reference body. When arranged at the second end, the first reflector, e.g. a surface normal of the first reflector may face or point towards the first end. With some examples the first reflector faces along an optical path extending from the first end towards the second end and extending from the second end to the first end.

The wavelength reference unit further comprises a reference head. The reference head is configured to be coupled with a light source for receiving a master beam from the light source. The reference head is configured to split the master beam received from the light source into a master signal beam and a master reference beam. The reference head is further configured to direct the master signal beam towards the first end of the reference body. Moreover, the reference head is aligned relative to the reference body such that the master signal beam enters the reference body at the first end and propagates towards the second end of the reference body.

The reference body comprises a well-defined optical path length extending between the first end and the second end. Moreover, the reference body is substantially insensitive to changes of environmental parameters, such as temperature, air pressure and/or humidity. Insofar, the optical path length from the first end of the reference body towards the second end of the reference body is substantially unaffected even if the at least one ambient parameter is subject to a significant change. In this way, the reference body provides a well-defined reference for the master signal beam as it propagates from the first end towards the second end and as it is reflected by the first reflector at the second end.

Typically, a reflected portion of the master signal beam as reflected by the first reflector at or near the second end of the reference body is recombined with the master reference beam. The reflected portion and the master reference beam co-propagate and interfere such that the relative phase between the master reference beam and the reflected portion of the master signal beam can be revealed and/or quantitatively measured. By detecting or quantitatively determining the relative phase between the master reference beam and the reflected portion of the master signal beam the optical path difference between these beams or partial beams can be precisely determined.

Now, and when the relative phase between these beams is subject to a modification during an interferometric measuring procedure conducted by the interferometric measuring device this is a direct indication for a modification or drift of the wavelength of the master beam as received from the light source because the optical path length of the reference body is and remains substantially unmodified even if ambient or environmental parameters should be subject to a significant change. Insofar, the reference head and the reference body provide a wavelength normal.

In this way the wavelength reference unit and in particular the reference body of the wavelength reference unit provides a standard reference for monitoring a potential drift or variation of the wavelength of the master beam emitted by the light source. The monitoring or quantitative determination of a relative phase shift between the reflected portion of the master signal beam and the master reference beam is further a direct indication of the magnitude of a frequency shift. In this way, a length or distance measurement as provided by the interferometric measuring device can be corrected and a potential detrimental effect of a wavelength or frequency drift of the light source for the interferometric measurement can be effectively compensated without any substantial hardware modifications of the interferometric measuring device.

According to a further embodiment of the wavelength reference unit the reference head is configured to capture at least a portion of the master signal being reflected by the first reflector. The reference head is further configured to provide the reflected portion of the master signal beam and the master reference beam to a reference detector. The light source and the reference detector as well as a signal processing unit connected to the reference detector may be located and implemented remote from the wavelength reference unit. Typically, the light source and the reference detector may belong to the interferometric measuring device.

The wavelength reference unit is configured to be coupled or to be connected to the interferometric measuring device in a light transferring manner, such that light, e.g. a master beam as provided by the light source, is transferrable or transmittable to the wavelength reference unit and hence into the elongated reference body.

The coupling between the interferometric measuring device and the wavelength reference unit is typically such, that the reflected portion of the master signal beam and the master reference beam are transferred and/or coupled to the reference detector. The reference detector may also belong to or may be integrated into the interferometric measuring device.

The wavelength reference unit may be detachably connectable to the interferometric measuring device. For this, the interferometric measuring device and the wavelength reference unit may be provided with mutually corresponding optical couplers. Such optical couplers may comprise optical fiber couplers. Moreover, light transmission from the interferometric measuring device, in particular from the light source to the wavelength reference unit and hence to the reference head may be fiber implemented. Also the light-transmissive coupling from the reference head and/or from the reference body to the reference detector may be implemented by fiber optical means. It may be hence fiber implemented as well. In this way, a well-defined detachable and reconfigurable coupling of the interferometric measuring device and the wavelength reference unit can be provided.

It is particularly intended, that the reference detector is connected in a signal transferring manner to a signal processing unit. Signals obtainable from the reference detector and being indicative of a relative phase shift between the reflected portion of the master signal beam and the master reference beam might be quantitatively and/or qualitatively indicative of a drift of the wavelength and/or drift of the frequency of the light source. Based on such a wavelength drift as determined on the basis of the wavelength reference unit the signal processing unit may be configured to correct or to recalculate a distance or surface profile of an object as obtained by the interferometric measuring device utilizing the light source. A correction or compensation of the interferometric measurement on the basis of a drift-compensated wavelength of the light source can be conducted in real time, e.g. during the interferometric measuring process or afterwards in a post-measurement compensation procedure.

For a post-measurement compensation the frequency or wavelength drift as determined by the wavelength reference unit is monitored over time. Respective time dependent wavelength drift signals are then correlated with respective time-encoded measurement data as obtained by the interferometric measuring device. Post-measurement compensation is particularly applicable, where the computational power of the signal processing unit is insufficient to provide a real time compensation or real time correction of signals and data obtained by the interferometric measuring device.

According to a further embodiment the wavelength reference unit comprises a base. The reference head is mounted on the base by a first mount. The reference body is mounted on the base by a second mount. First and second mounts can be fixed on the base. The reference head can be fixed to the base via the first mount. The reference body can be fixed to the base via the second mount. At least one of the first and second mounts can be integrally formed with the base. At least one of the first and second mounts may further provide an adjustable, hence variable arrangement of the reference head relative to the reference body. By means of the base and at least one of the first and second mounts a relative position and/or orientation of the reference head and the reference body can be fixed. In this way, and at least during an interferometric measurement, the reference head remains stationary relative to the reference body.

With some examples the base and/or at least one of the first and second mounts is made of a material being substantially invariant to varying ambient conditions. Hence, the base and/or at least one of the first and second mounts is or are made of a material comprising a comparatively low coefficient of thermal expansion (CTE). In this way, a relative position, orientation as well as a distance between the reference head and the reference body can be kept constant, at least during the interferometric measurement.

With some examples the base forms or constitutes a housing of the wavelength reference unit. The reference body may be mounted to the housing or may be integrated into the housing, e.g. by the second mount. In this way, a relative position, orientation or distance between the reference head and the reference body can be kept constant. Moreover, the base, the first mount and the second mount are configured to minimize a distance between the reference head and the reference body.

Between the reference head and the reference body the master signal beam propagates in free space, e.g. through air. By reducing the free propagation distance between the reference head and the reference body to a minimum, defects and an influence of varying ambient conditions on the reference measurement provided by the wavelength reference unit can be reduced to a minimum. Typically, the reference head comprises an optical fiber or the reference head is connected to an optical fiber through which the master beam is provided from the light source to the reference head. Here, a fiber end face that terminates inside the reference head may serve to split the master beam into the master signal beam and the master reference beam.

Hence, the end face of the fiber terminating inside the reference head and hence the distance between the fiber end face and the reference body and/or the distance between the fiber end face and the first reflector determines an optical reference path along which the master signal beam and the reflected portion thereof propagate. It is of particular benefit when the optical path length of the optical reference path is kept or maintained at a constant optical length even if ambient conditions should be subject to variations during the interferometric measurement. In this way, the optical reference path provides a reference allowing to determine an eventual drift of the wavelength or frequency of the light source.

According to another example the reference body comprises a material or is made of a material having a coefficient of thermal expansion (CTE) of less than 50 x10⁻⁷/K, less than 40 x 10⁻⁷/K, less than 30 x 10⁻⁷/K, less than 20 x 10⁻⁷/K, less than 13 x 10⁻⁷/K, less than 8 x 10⁻⁷/K, less than 5 x 10⁻⁷/K, less than 2 x 10⁻⁷/K, less than 1 x 10⁻⁷/K, less than 0.5 x 10⁻⁷/K, or less than 0.1 x 10⁻⁷/K at room temperature, e.g. 20°C. Making use of such material provides a rather constant geometry or constant optical reference path length even if the ambient temperature should be subject to significant variations during an interferometric measurement. Moreover, also the base and/or at least one of the first and second mount or even both mounts can be made of such a low CTE material. In this way also the relative position and/or the distance between the reference head and the reference body can be kept constant, substantially irrespective of eventual changes of the ambient temperature.

According to another example a longitudinal distance between the first end and the second end of the reference body is larger than 10,000 WL, larger than 100,000 WL or larger than 1,000,000 WL, wherein WL is the wavelength of the master beam. With some examples the longitudinal distance between the first end and the second end of the reference body is between 100,000 WL and 500,000 WL. With some examples the distance is between 200,000 WL and 400,000 WL. The distance may be between 200,000 WL and 300,000 WL. With such large distances between the first end and the second end, the optical reference path comprises a minimum length.

Depending on the wavelength of the master beam, which may range between the ultraviolent and infra-red wavelength region typical longitudinal extensions of the reference body range between 1cm and 1 m. The optical reference path provided by the reference body is larger than two times the distance between the first end and the second end of the reference body, presumed that the master signal beam propagates from the first end towards the second end and returns from the second end towards the first end through reflection at the first reflector. Making use of such a comparatively large longitudinal extension of the reference body is beneficial to increase the precision of the wavelength reference measurement provided by the wavelength reference unit.

With an increasing optical reference path length the measurable phase shift between the master reference beam and the reflected portion of the master signal beam will evolve. Hence, the phase shift between the reflected portion of the master signal beam and the master reference beam increases with an increasing distance between the first and the second end. In this way, a drift of the wavelength of the light source can be detected with high precision.

According to another example the reference body comprises a solid body or a hollow body made of one of the following materials: a borosilicate glass, Invar, a fused quartz, a glass ceramic material and/or lithium-aluminium silicate glass ceramic. These materials exhibit rather low coefficients of thermal expansion as described above. The reference body may be made as a solid body consisting of only one of these materials. With some other examples, the reference body comprises a hollow body, e.g. a tube made of one of these materials. Making use of a hollow reference body is of particular benefit for reducing weight and manufacturing costs for such a body.

Moreover, a hollow reference body, e.g. comprising an open first end and featuring a reflector, e.g. a mirror at the second end exhibits a rather low absorption for the master signal beam. However, a hollow reference body might be sensitive to variations of the ambient air pressure and the humidity of surrounding air, presumed that an interior of the hollow body is filled with ambient air. With some other examples of a hollow reference body, the interior of the reference body is evacuated. Here, the reference body may comprise a window at the first end and may further comprise a mirror at the second end. Inside the reference body, the master signal beam propagates through an evacuated space. Providing a substantially evacuated interior of a closed or sealed hollow reference body makes the reference body rather insensitive to varying ambient conditions in terms of air pressure and/or humidity.

The same applies when the reference body comprises a solid body of one of the above-mentioned materials. Typically, and when provided as a solid body the reference body is made of borosilicate glass, fused quartz or a glass ceramic exhibiting a required degree of optical transmissivity. When the body is made of Invar it is typically a hollow body having a first end which is either open or which is covered by a window and featuring the reflector at the second end.

With further examples the reference head is attached and/or fixed to the first end of the reference body. By attaching or fixing the reference head to the first end of the reference body, the distance between the reference head and the second end and hence the first reflector can be easily fixed and kept constant during the interferometric measurement. The reference head may be fixed to an end face of the reference body. For this, the reference head may comprise a mount configured to attach to the first end and/or to the first end face of the reference body.

According to another example the first end of the reference body comprises a first end face. The first end face comprises a surface normal extending at a predefined angle relative to the elongation of the elongated reference body. In other words, the first end face of the reference body may be tilted relative to the elongation of the reference body. The surface normal may extend at an angle between 5°-45° relative to the longitudinal axis of the reference body or relative to the elongation of the reference body. With such a skewed orientation of the first end face it can be provided, that a portion of the master signal beam reflected at the first end face does not re-enter the reference head but that a portion of the master signal beam inevitably reflected by the first end face of the reference body is outside an angle of acceptance of the reference head. In this way, a detrimental impact of an eventual back-scattered or back-reflected portion of the master signal beam can be avoided and reduced.

According to a further example the base comprises a housing with an aperture for the master beam. In particular, the base may constitute such a housing, wherein the reference head and the reference body are connected and fixed to the base and/or to the housing. The aperture is enclosed by a frame. In particular, the aperture may be encircled or may be enclosed in a circumferential direction by a frame or rim. A surface normal of the frame surrounding or enclosing the aperture extends at a predefined angle relative to the propagation direction of the master beam as it propagates through or out of the housing. In this way it is provided that the master signal beam and/or a portion of the master signal beam reflected by the first reflector propagates substantially parallel to a longitudinal axis of the reference body.

Here, the first reflector provided at the second end of the reference body can be oriented substantially perpendicular to the longitudinal axis of the reference body. In other words, a surface normal of the first reflector may extend substantially parallel to the longitudinal axis of the reference body. At the same time and due to a refractive index of the material of the reference body that differs from the vacuum refractive index an inevitable diffraction of the master signal beam at the boundary surface of the reference body can be effectively compensated. With some examples the orientation of the reference head and/or the orientation of the housing relative to the reference body can be adjusted.

Typically, a surface normal of the first end face of the reference body extends substantially parallel to a surface normal of the frame or rim surrounding the aperture of the housing. The angle of the plane of the aperture relative to the propagation direction of the master beam inside the housing and/or the angle of the surface normal of the first end face of the reference body relative to the longitudinal axis of the reference body is governed by the refractive index of the interior or of the material of the reference body.

With some examples, the reference head is adjustably mounted inside the housing or on the base with respect to at least two perpendicularly oriented axes of rotation. In this way, the direction of the master signal beam relative to the elongation and/or geometry of the reference body can be adjusted such that the reflected portion of the master signal beam re-enters the reference head, such that a major part of the reflected portion of the master signal beam re-enters the optical fiber by way of which the reference head is optically coupled and/or connected to the light source and/or to the reference detector.

According to another example the first end face of the reference body is attached and/or fixed to the frame. With some examples the reference body is at least partially located outside the housing of the wavelength reference unit. In this way and when the master beam is in the visible spectral range a proper operation of the wavelength reference unit can be even optically inspected as the master signal beam propagates through the reference body. Moreover, by fixing the first end face of the reference body to the frame, a distance between the respective end face and a second reflector configured to split the master beam into the master signal beam and the master reference beam can be reduced to a minimum. Insofar, a rather direct and immediate attachment or fixing of the first end face of the reference body to the frame helps to reduce eventual influences of varying ambient conditions to the reference measurement.

According to another example the wavelength reference unit further comprises at least one sensor to quantitatively measure at least one ambient parameter. The ambient parameter is one of an ambient temperature, an ambient air pressure or ambient humidity. By means of the at least one sensor respective sensor signals can be generated. The influence of varying ambient parameters on a variation of the optical reference path, i.e. the optical path difference from the reference head to the first reflector, in particular from a fiber end face terminating inside the reference head and the first reflector can be characterized. For instance and by a calibration the effect of varying temperature, varying air pressure and/or varying ambient humidity on the optical reference path can be stored in a memory, e.g. in form of a lookup table. By quantitatively measuring at least one of these ambient parameters, a respective correction of the measured length of the optical reference path can be provided by a signal processing unit by making use of calibration or reference data stored in the memory.

According to another example the wavelength reference unit comprises at least one of a heating or cooling element that is thermally coupled to the reference body and/or which is thermally coupled to the base or housing of the wavelength reference unit. Typically, the at least one heating and/or cooling element is controlled by a controller connected in a signal transferring manner to the at least one sensor. If the sensor should for instance determine a decrease in temperature the respective controller may activate the heating element so as to keep the temperature at a constant level. With other examples and when for instance the sensor determines a rise in temperature the controller is configured to decrease the effect of the heating element and/or to activate the cooling element so as to keep the temperature at a constant level. In this way, an eventual detrimental effect of a temperature-induced variation of the optical reference path can be effectively reduced or avoided. With some examples, heating and/or cooling elements comprise at least one Peltier element.

With some other or further examples the wavelength reference unit comprises a thermal insulation by way of which a sensitivity to varying ambient temperature can be decreased.

In another aspect the present disclosure relates to an interferometric measuring device. The interferometric measuring device comprises a light source, in particular a laser light source configured to generate a measurement beam. The measuring device further comprises a beam splitter configured to split the measurement beam into a reference beam, a signal beam and a master beam. The interferometric measuring device further comprises at least one sensor head coupled to the light source. The sensor head is configured to direct the signal beam towards an object and to capture a portion of the signal beam reflected from the object. The measuring device further comprises at least a first signal detector coupled to the at least one sensor head and provided with the reference beam and the captured portion of the signal beam. Insofar, the interferometric measuring device is configured and capable to measure a distance between the sensor head and a surface of the object. Moreover, the interferometric measuring device may provide a well-defined relative motion between the sensor head and the object. Insofar, the surface of the object can be scanned by the sensor head in order to obtain numerous distances to numerous points on the surface of the object.

By way of example the interferometric measuring device may be implemented in accordance to a device and procedure as disclosed in DE 10 2011 011 065 A1, the entirety of which being incorporated herein by reference. The at least one sensor head is implemented as a distance sensor directed to the object and/or directed to a reference body. The at least one sensor head may also be implemented as a reference sensor directed towards a stationary reference object. By way of numerous sensor heads a distance to at least one or two stationary reference objects can be determined in order to precisely determine a position of a holder, wherein at least one further distance sensor, also implemented as a further sensor head and being mounted on such a holder being directed to the surface of the object to be measured.

The present interferometric measuring device can be generally implemented in many different ways and is not limited to a device as disclosed in DE 10 2011 011 065 A1.

The interferometric measuring device further comprises a reference detector. The reference detector is provided with the reference beam or with a master reference beam. Typically, the reference detector is provided with the master reference beam. It may be only provided with the master reference beam and with a reflected portion of the master signal beam. Insofar, the interferometric measuring device is further equipped with a reference unit as described above. Here, the reference head of the reference unit is coupled to the light source and is further coupled to the reference detector.

Here, the reference head is configured to provide the reflected portion of the master signal beam and the master reference beam to the reference detector. The reference head may be coupled to the reference detector of the interferometric measuring device by way of a fiber optic coupling, hence by a single or by multiple optical fibers. For instance, the reference head of the reference unit is coupled or connected to the light source by a first optical fiber in order to receive the master signal beam from the light source. The reference head, e.g. a fiber end face of the optical fiber may serve as a second reflector or as a beam splitter by way of which the master beam is split or separated into the master reference beam and the master signal beam.

The master signal beam propagates towards and through the reference body. A reflected portion of the master signal beam is captured by the reference head and is coupled into the first optical fiber. Then, the reflected portion of the master signal beam co-propagates with the master reference beam. These beams are configured to interfere and to produce an interference pattern on the reference detector. There may be provided only one optical fiber to connect the reference head with both, the light source and the reference detector. For this, the interferometric measuring device may comprise an optical circulator.

A first port of the optical circulator is connected to the light source, typically via a fiber optic connection. A second port of the circulator is connected to the reference head and a third port of the optical circulator is connected to the reference detector. The optical circulator is configured to direct or to transfer light received from the first port towards the second port. Light entering the second port is directed towards the third port. In this way the second port of the optical circulator is configured to direct the master beam to the reference head and to receive the master reference beam and the reflected portion of the master signal beam. These received and mutually interfering beams are then directed towards the reference detector, typically by a fiber optical coupling. A fiber optic implementation of the interferometric measuring device, e.g. providing a fiber optical coupling between the light source, the at least one sensor head, the at least one signal detector, the reference detector and the reference unit provide a rather robust implementation of the interferometric measuring device.

When implemented in the interferometric measuring device the reference unit provides a reference for measuring a drift or deviation of the wavelength of the light source from a nominal wavelength. Insofar, a wavelength drift can be precisely determined on the basis of a phase shift between the master reference beam and the reflected portion of the master signal beam. The determined wavelength drift can then be used to recalculate a distance information obtained by the at least first signal detector.

According to a further example the interferometric measuring device comprises a signal processing unit. The signal processing unit is connected to the first signal detector and is further connected to the reference detector. The signal processing unit is further configured to determine a distance between the at least one sensor head and an object on the basis of an interference between the captured portion of the signal beam and the reference beam. Moreover, the signal processing unit is configured to adjust or to recalculate the distance on the basis of an interference between the reflected portion of the master signal beam and the master reference beam. In detail, the interference between the reflected portion of the master signal beam and the master reference beam is a direct indication of a wavelength drift of the light source because the wavelength reference unit, in particular the reference body of the wavelength reference unit, at least in some embodiments, is substantially invariant to variations of the ambient parameters, such as ambient temperature, ambient air pressure or ambient humidity.

According to further examples, wherein the wavelength reference unit is equipped with at least one sensor to measure at least one ambient parameter the interferometric measuring device, in particular the signal processing unit, is connected to the respective sensor. In this way an eventual influence of an ambient parameter on the interference between the reflected portion of the master signal beam and the master reference beam can be taken into account. Hence, the recalculation or compensation of a distance based on the interference between the captured portion of the signal beam and the reference beam is then not only based on the interference between the reflected portion of the master signal beam and the master reference beam but also on the basis of at least one ambient parameter.

Typically, the influence or effect of a varying ambient parameter on the interference between the reflected portion of the master signal beam and the master reference beam is obtained in advance, during a separate calibration process. Deviations or the influence of the ambient parameter on the interference between the reflected portion of the master signal beam and the master reference beam can be stored in a lookup table. The signal processing unit has respective access to such a lookup table and is configured to take into account variations of the at least one ambient parameter. Furthermore, it should be noted, that the interferometric measuring device comprises a reference unit as described above. Insofar, all features, benefits and effects obtainable by the reference unit either alone or in combination with the interferometric measuring device equally apply to the interferometric measuring device; and vice versa.

According to another aspect the present disclosure also relates to a method of correcting a distance measurement provided by an interferometric measuring device. The interferometric measuring device comprises a light source. The interferometric measuring device is configured to determine a distance to an object on the basis of an interference measurable by a signal detector between a signal beam reflected from the object and a reference beam. The reference beam and the signal beam emanate from the light source. They may emanate from a measurement beam produced and/or emitted by the light source. The measurement beam may be split at least into the signal beam and the reference beam.

The method of correcting the distance measurement comprises the steps of providing a master beam from the light source in addition to the reference beam and the signal beam. Typically, the master beam, the reference beam and the signal beam are mutually coherent. Furthermore, the master beam is split into a master signal beam and a master reference beam. The master signal beam is directed towards a first end of an elongated light-transmissive reference body. The reference body comprises a first end and further comprises a second end. The master signal beam is aligned relative to the elongation of the reference body such that the master signal beam enters the reference body at the first end and propagates towards the second end through the reference body.

A first reflector is arranged at the second end and faces towards an interior of the reference body. Insofar, the master signal beam propagating through the reference body is reflected by the first reflector at the second end of the reference body. Typically, the reflected portion of the master signal beam propagates in the opposite direction compared to the master signal beam. The reflected portion and the master reference beam typically co-propagate and may spatially overlap. The method further comprises capturing at least a portion of the master signal beam reflected by the first reflector and providing the reflected portion of the master signal beam and the master reference beam to a reference detector.

There is further generated an interference pattern of the master reference beam and the reflected portion of the master signal beam and a phase shift between the reflected portion of the master signal beam and the master reference beam is monitored over time. On the basis of a phase shift between the reflected portion of the master signal beam and the master reference beam a wavelength drift of the light source is derived over time. Based on the wavelength drift of the light source a corrected distance to the object is calculated.

Typically, the method of correcting a distance measurement is implementable by an interferometric measuring device as described above using a wavelength reference unit as described above. Insofar, all effects, features, and benefits as described above in connection with the wavelength reference unit and in connection with the interferometric measuring device equally apply to the method of correcting a distance measurement as provided by the interferometric measurement device.

The method is particularly applicable to an interferometric measuring device as described in document DE 10 2011 011 065 A1 but is not limited to such interferometric measuring devices. The method is particularly dedicated to the use of a wavelength reference unit as described above. In general, the wavelength reference unit can be combined and used with any interferometric measuring device, provided that the interferometric measuring device is equipped with a reference detector and with a signal processing unit configured to determine or to calculate a wavelength drift on the basis of an interference signal provided by the wavelength reference unit.

The calculation of a corrected distance to the object may be conducted in real time during an interferometric measurement process. Alternatively, calculation of a corrected distance can be provided after an interferometric measurement took place. For this it is only required to monitor the wavelength drift over time and to assign the measurement data as provided by the interferometric measuring device with respective timestamps. Then, distance data obtained and provided by the interferometric measuring device at a certain point in time can be compensated or adjusted with regard to a wavelength drift at this particular point in time. Hence, when the calculation and correction of the distance to the object takes place at a temporal delay compared to the interferometric measurement of the surface of the object the interferometric measurement of the surface of the object should be synchronized with the monitoring of the wavelength drift in the time domain.

According to a further example the method further comprises the step of measuring of at least one of the following ambient parameters, namely ambient temperature, air pressure and humidity. The wavelength drift is then derived on the basis of the measured ambient parameter or by taking into account the measured ambient parameter.

In this way eventual variations or modifications of an interference signal between the reflected portion of the master signal beam and the master reference beam that might be due to a variation of at least one of the above mentioned ambient parameters can be precisely compensated for.

With such examples, wherein the wavelength reference unit is equipped with a temperature sensor and with at least one of a heating element and a cooling element the method may further include an active regulation or control of the temperature in the vicinity of the wavelength reference unit, at least in direct vicinity of the reference body. Insofar and, e.g. by means of a separate controller or by means of the above mentioned signal processing unit, the temperature of the reference body and/or the temperature of the wavelength reference unit can be kept at a constant level.

According to a further aspect there is provided a computer program configured to be executed by a signal processing unit of an interferometric measuring device as described above. The computer program when executed by the signal processing unit is particularly configured to determine and/or to monitor a phase shift between the reflected portion of the master signal beam and the master reference beam over time when captured by the reference detector. The computer program is further configured to derive a wavelength drift of the light source on the basis of the phase shift. The computer program is further configured to calculate a corrected distance to the object by taking into account the wavelength drift of the light source. In particular, the computer program may be configured to recalculate the distance of the object, wherein the distance to the object is derived or calculated on the basis of an interference between a reflected and captured portion of the signal beam and the reference beam of the interferometric measuring device.

In particular, the above mentioned computer program is configured to execute the above described method of correcting a distance measurement provided by an interferometric measuring device. Insofar, the features, benefits and effects as described above in connection with the method, the interferometric measuring device and the wavelength reference unit equally apply to the computer program; and vice versa.

### Brief description of the drawings

In the following, numerous examples of a wavelength reference unit and an interferometric measuring device are described in greater detail by making reference to the drawings, in which:
- Fig. 1: shows a schematic illustration of an interferometric measuring device equipped with a wavelength reference unit,
- Fig. 2: is a detailed schematic illustration of one example of a wavelength reference unit,
- Fig. 3: is indicative of a further implementation of a wavelength reference unit,
- Fig. 4: shows another example of a wavelength reference unit,
- Fig. 5: is illustrative of a further example of a wavelength reference unit,
- Fig. 6: shows another implementation of a wavelength reference unit,
- Fig. 7: is illustrative of a further example of a wavelength reference unit,
- Fig. 8: shows another example of the wavelength reference unit and

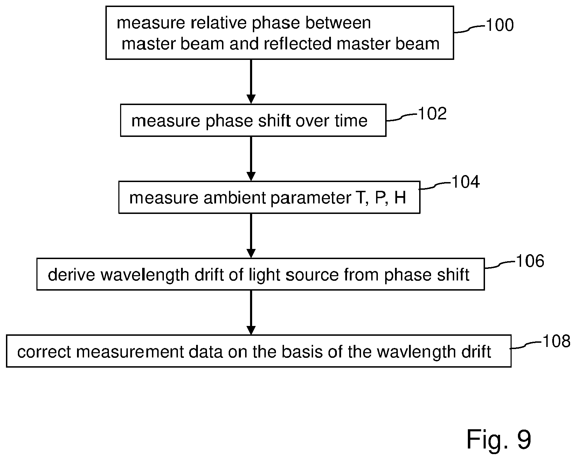

- Fig. 9: is illustrative of a flowchart of a method of correcting a distance measurement provided by an interferometric measuring device.

### Detailed Description

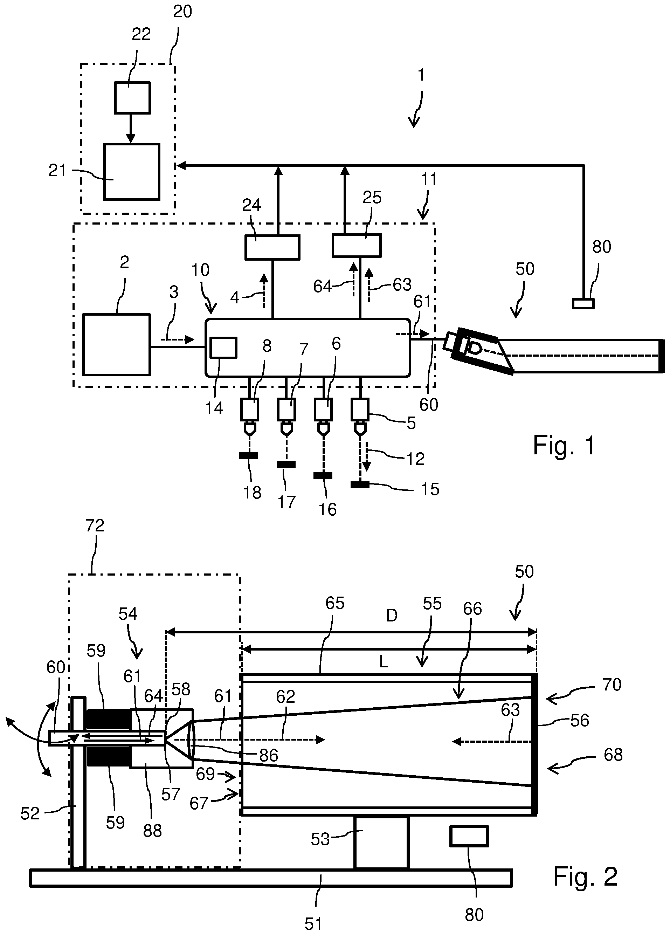

Fig. 1 schematically illustrates an interferometric measuring device 1. The measuring device 1 comprises a measurement stage 11. The interferometric measuring device 1 further comprises a signal processing unit 20 and a wavelength reference unit 50. The measuring device 1 comprises a light source 2. The light source 2, typically implemented as a laser light source, is configured to provide a measurement beam 3. The measurement beam 3 is directed to a signal coupling unit 10. The signal coupling unit 10 comprises at least one beam splitter 14 in order to split the measurement beam 3 into a reference beam 4 and at least one signal beam 12. The signal coupling unit 10 may be implemented by fiber optics. There are provided numerous measurement heads 5, 6, 7, 8 by way of which a signal beam 12 or numerous signal beams 12 can be directed to different objects 15, 16, 17, 18 in order to determine a distance between the measurement heads 5, 6, 7, 8 and the respective objects 15, 16, 17, 18 by way of interferometry.

With some examples, the beam splitter 14 is located inside a respective measurement head 5, 6, 7, 8. Hence, the measurement beam 3 as provided by the light source 2 may be coupled by way of the signal coupling unit 10 to numerous measurement heads 5, 6, 7, 8. Each measurement head is configured to split a received portion of the measurement beam into a respective reference beam and a signal beam. In this way, the distance to multiple objects 15, 16, 17, 18 can be measured and detected separately. A signal detector 24 also connected to the signal coupling unit 10 may comprise a number of individual light sensitive detectors, wherein each detector is assigned and coupled to only one of the measurement heads 5, 6, 7, 8.

On the respective detectors, each of which comprising at least one photodiode, an interference pattern arising from an interference of a reflected portion of the signal beam 12 and the reference beam 4 can be obtained. The interference pattern is indicative of a phase shift between the signal beam 12 reflected by the object 15 and the reference beam 4.

By way of the signal detector 24 electronic signals can be generated that are transferred to the signal processing unit 20. The signal processing unit 20 can be implemented as a computer, e.g. a personal computer, or a tablet computer. The signal processing unit 20 comprises at least a processor 21 and a data storage 22. Typically, the signal processing unit 20 is equipped with numerous input and output means in order to provide measurement results to a user or to further signal processing means.

The interferometric measuring device 1, in particular the signal coupling unit 10, the light source 2, the numerous measurement heads 5, 6, 7, 8, the detector 24 and the signal processing unit 20 can be implemented in a way as already described in document DE 10 2011 011 065 A1.

The light source 2 may comprise one or numerous laser light sources. Insofar, the measurement beam may comprise numerous laser beams of different wavelength. The signal coupling unit 10 may comprise at least one or numerous optical circulators as well as demultiplexers in order to separate numerous different discrete wavelengths of the reference beam 4 and respective captured portions of the reflected signal beam 12.

In order to provide a precise distance measurement it is crucial, that the wavelength of the light source 2 is constant over time or that at least eventual deviations or a drift of the wavelength are precisely determined.

For this, the interferometric measuring device 1 is equipped with a wavelength reference unit 50. The wavelength reference unit 50 is connected by an optical fiber 60 to the signal coupling unit 10. In this way the wavelength reference unit 50 is provided with a master beam that is branched off from the measurement beam 3. The master beam is coupled and provided to a reference head 54 as illustrated in greater detail in Fig. 2. The reference head 54 is a component or part of the wavelength reference unit 50. The reference head 54 is connected by an optical fiber 60 with the light source 2.

The wavelength reference unit 50 further comprises a reference body 55. The reference body 55 comprises an elongated light-transmissive body with an interior 66 and a sidewall 65. The reference body 55 comprises a first end 67 and a second end 68. The first end 67 is a longitudinal end of the reference body 55. The second end 68 is an oppositely located longitudinal end of the elongated reference body 55. The second end 68 is provided with a first reflector 56.

As illustrated in the numerous embodiments of Fig. 2 to Fig. 8 the second end 68 of the reference body 55 is provided with the first reflector 56 facing towards the interior 66 of the reference body 55. Insofar, light, such as a master signal beam 62 provided by the reference head 55 and entering the reference body 55 via the first end 67 is directed towards and onto the first reflector 56 and is reflected as a reflected portion 63 back towards the reference head 54. At least a portion of the reflected beam 65 is captured by the reference head 54 and is coupled into the optical fiber 60. Hence, at least a portion of the master beam 61 as provided by the optical fiber 60 to the reference head 54 propagates through the elongated reference body 55 and is reflected at a remote end of the reference body 55 back into the optical fiber 60.

The reference head 54 is further configured to split the master beam 61 into a master signal beam 62 propagating towards and into the reference body 55 and a master reference beam 64. Typically, the optical fiber 60 comprises a fiber end face facing towards the reference body 55. The fiber end face serves as a second reflector 58. The fiber end face and hence the second reflector 58 is configured as a partially reflecting reflector. Insofar, the end face of the fiber 60 may -be regarded as a beam splitter 57. At least a portion of the master beam 61 propagates through the fiber end face and enters the reference body 55 as the master signal beam 62. A portion of the master beam 61 is reflected by the second reflector 58 as master reference beam 64.

Insofar, the reference head 54 and the reference body provide a kind of a reference interferometer. The entire reference unit 50 may be regarded as a reference interferometer providing a measurable interference between a reflected portion 63 of the master signal beam 62 and the master reference beam 64. The mutually interfering beams 63, 64 are co-propagating in the fiber 60 from the reference unit towards a reference detector 25 of the interferometric measuring device 1. The reference detector 25 may be connected by a fiber optical connection to the signal coupling unit 10. The signal coupling unit 10 may comprise one or numerous optical circulators by way of which light entering the signal coupling unit 10 via the optical fiber 60 is directed to the reference detector 25. On the reference detector 25, typically on a photodiode of the reference detector 25 the reflected portion 63 of the master signal beam 62 and the master reference beam 64 mutually interfere. The interference on the reference detector 25 is a direct indication of a phase shift and hence of an optical path difference between the master reference beam 64 and the captured and reflected portion 63 of the master signal beam 62.

Generally, the reference head 54 may be implemented in a similar way as the sensor heads 5, 6, 7, 8. The reference head 54 and the sensor heads 5, 6, 7, 8 may be substantially identical.

As further illustrated in Fig. 2, the reference head 54 comprises a head unit 88 on which the optical fiber 60 terminates. The optical fiber 60, in particular its free end is fixedly connected to the head unit 88. On the head unit 88 there is further provided an optical lens 86 in order to collimate the master signal beam 62 onto the first reflector 56 and to couple the reflected beam portion 63 back into the optical fiber 60.

The reference head 54 is further provided with a piezoelectric transducer 59. The head unit 88 is mounted on a mount 52 through the piezoelectric transducer 59. In this way, the position of the head unit 88 with regard to the mount 52 can be modified by appropriately driving the transducer 59. In typical examples, the piezoelectric transducer is periodically driven.

With some examples the piezoelectric transducer is periodically driven at a driving frequency between 100 Hz and 100 kHz. Periodically driving the transducer provides a phase shift on the respective partial beam or sub-beam of a partial beam. In this way, the signal processing, in particular the determination of the relative phase between the interfering sub-beams of first and second partial beams on the signal analyzer can be improved. As the piezoelectric transducer is periodically driven the phase of the interference pattern on a respective detector of the signal analyzer is subject to a corresponding movement.

This movement is detectable and analyzable by the signal processing connected to the respective detector. The variation of the measurable intensity of an interference pattern or interference fringe on the detector dependent over the phase shift of the interfering sub-beams is quantitatively and rather precisely known. Modifying the phase between the interfering sub-beams through the periodic driving of the piezoelectric transducer thus enables to precisely determine the relative phase between the interfering sub-beams. Relative phases being as small as 1/1000 of the wavelength can be precisely determined in this way. The precision of the measuring device can be thus improved.

The wavelength reference unit 50 further comprises a base 51 and a first mount 52 by way of which the reference head 55 is mounted on the base 51. The wavelength reference unit 50 further comprises a second mount 53 connected or fixed to the reference body 55 and connected and/or fixed to the base 51. The wavelength reference unit 50 may comprise a housing 72 at least encapsulating the reference head 54 and at least a portion of the reference body 55. The base 51, the first mount 52 and/or the second mount 53 may be part of the housing 72 or may be integrally formed with the housing 72. The reference body 55 comprises a first end face 69 provided at the first end 67. The reference body 55 comprises a second end face 70 provided at the second end 68. Typically, the distance between the reference head 54 and the reference body 55 should be kept at a minimum to reduce eventual effects of ambient parameters.

The reference body 55 and the entire wavelength reference unit 50 are configured and designed to provide a constant optical path difference between the master reference beam 64 and the reflected portion 62 of the master signal beam 62, even if ambient conditions in direct vicinity of the wavelength reference unit 50 and/or in direct vicinity of the interferometric measuring device 1 should change.

Insofar, the optical path difference or optical path length between the end of the optical fiber 60 and the first reflector 56 should be kept rather constant irrespective of changes of ambient conditions. For this it is of particular benefit, when the base 51, the first mount 52 and the second mount 53 or when the entirety of the housing 72 is made of a material exhibiting a comparatively low CTE. Moreover, the reference body 55 is preferably made of a material or comprises a material having a comparatively low CTE. In particular, the housing 72, e.g. the base 51, the mount 52 and/or the mount 53 may be made of Invar exhibiting a rather low CTE at room temperature.

In the illustration of Fig. 2, the reference body 55 comprises a hollow interior 66. Hence, the first end face 69 is an open end face and is only enclosed by a circumferential sidewall 65 of the reference body 55. When the reference body 55 has an open end as presently illustrated the sidewall 65 may be made of a non-transparent, hence opaque material, such as Invar. The opposite, hence the second end face 70 of the reference body 55 may be provided with the first reflector 56, hence a mirror mounted on the respective end of the sidewall 65.

In order to compensate an eventual influence of ambient humidity or ambient air pressure on the optical path between the optical fiber 60 and the first reflector 56 there may be provided at least one or numerous ambient sensors 80, configured to measure at least one of an ambient temperature, an ambient air pressure and/or an ambient humidity. The influence of these ambient parameters on the optical path length is precisely known and may be stored in the memory 22 of the signal processing unit 20. In this way any effects or variations of the length of the optical reference path that arise due to varying ambient conditions can be monitored by the at least one ambient sensor 80 and can be compensated by calculation. A remaining and measurable offset of the optical reference path between the reference head 54 and the first reflector 56 is then directly indicative of a wavelength drift of the light source 2.

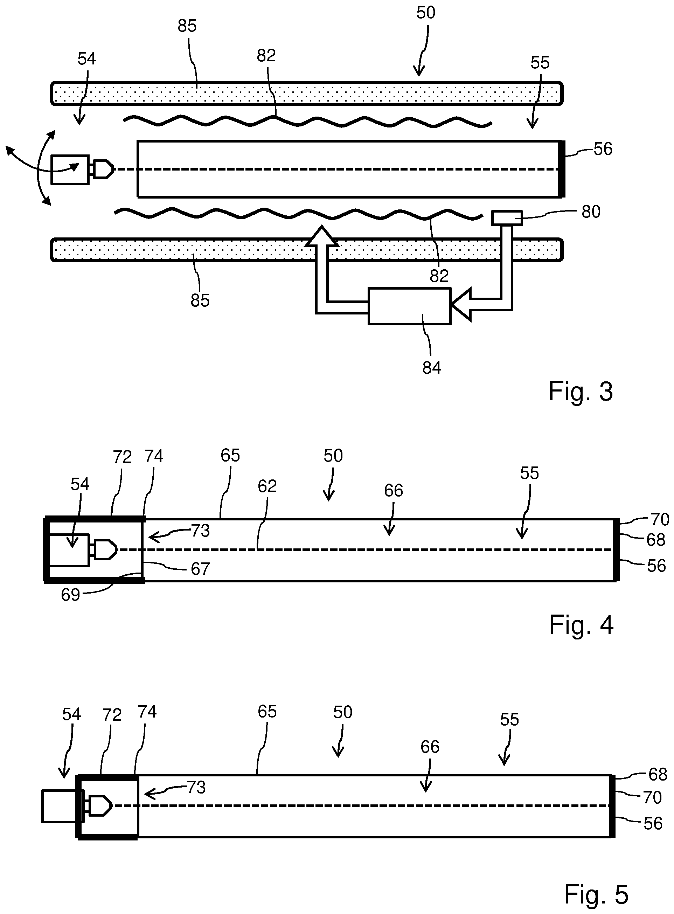

The ambient sensor 80 may be connected in a signal transferring manner to the signal processing unit 20. With other examples, such as for instance illustrated in Fig. 3, the ambient sensor 80 may be provided with a separate control 84 that may be further connected to at least one heating and/or cooling element of the reference unit 50. As illustrated in Fig. 3 and by way of the sensor 80 at least a temperature of the reference unit 50 can be measured and determined. By way of the control 84, e.g. implemented as a PID controller the heating and/or cooling elements 82 can be activated in order to keep the temperature of the reference unit 50 and/or of the reference body 55 at a constant level.

The reference unit 40 as illustrated in Fig. 3 may be further provided with a thermal insulation 85. At least the reference body 55 and/or the heating and/or cooling elements 82 may be encapsulated by the insulation 85.

As indicated by the arrows in direct vicinity of the reference head 54 in Figs. 2 and 3, the reference head 54 may be adjustable at least with regard to one or two axes of rotation relative to the reference body 55. In this way the direction of the master signal beam 62 can be adjusted relative to the reference body 55 and/or relative to the first reflector 56 such that a at least a required degree of the reflected portion 63 of the master signal beam 62 is captured by the reference head 54.

In the embodiments as illustrated in Figs. 4-8 the reference head 54 is provided with a housing 72. The housing 72 may provide a base 51 and at least one of the first and the second mounts 52, 53. As shown in Fig. 4, the housing 72 and hence the reference head 54 is directly mounted and/or fixed to the first end 67 of the reference body 55. It may be fixed to the first end face 69 and/or to a respective end of the sidewall 65 of the reference body 55. In this way, a distance D between the end face of the fiber 60 and the first reflector 56 as illustrated in Fig. 2 can be kept at a minimum. In order to reduce the effect of ambient parameters it is desirable to reduce the distance D towards a longitudinal extension L of the reference body 55.

Moreover and as shown in Fig. 4, the reference body 55 is a solid reference body made of a light-transmissive material, such as borosilicate glass, a fused quartz or a glass ceramic, all of which exhibiting a comparatively low CTE.

In this way, the master signal beam 62 enters the medium of the solid reference body 55 at the first end 67 and is reflected at the second end 69. The first reflector 56 can be provided as a reflective coating on the second end 69 of the reference body 55.

As an alternative to a solid body it is even conceivable, that the reference body 55 is hollow but then, the end faces 69, 70 at the opposite ends 67, 68 of the elongated body should be sealed such that the interior 66 of the elongated body 55 can be evacuated. For this it would be sufficient, when the first end face 69 is covered by a transparent window and when the second end face 70 is provided with a reflective mirror.

By comparing the examples of Figs. 4 and 5 it is immediately apparent that with Fig. 5 the housing 72 and/or the first mount 52 is attached to a side section but not to an end of the reference head facing away from the reference body 55. In this way, the elongation of the housing 72 in longitudinal direction of the reference body 55 can be reduced. Insofar, an eventual impact of a thermal expansion of the housing 72 on variations of the optical reference path can be reduced.

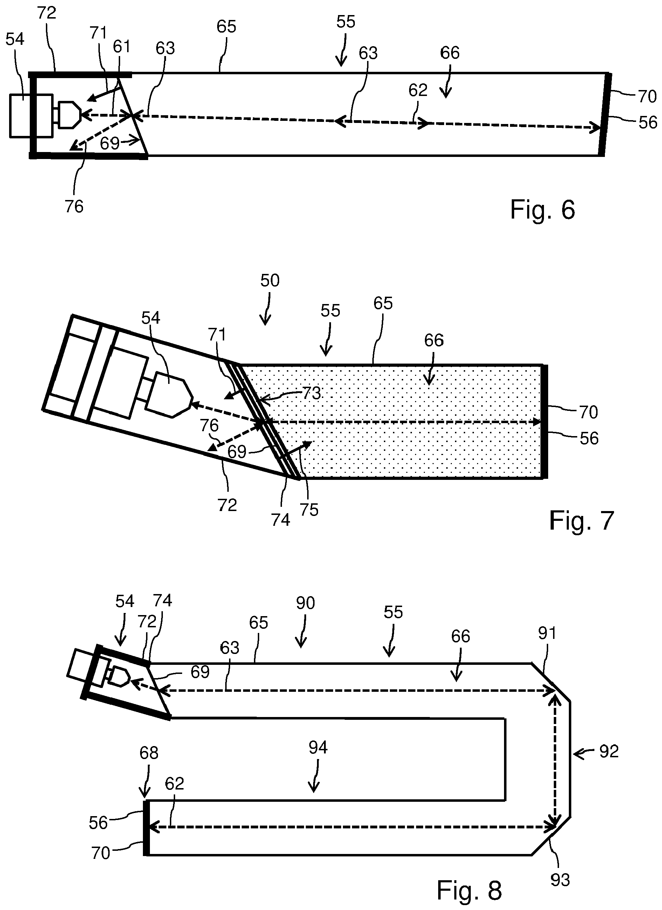

In the example of Fig. 6 the first end face 69 is slanted or skewed with regard to the elongation of the reference body 55. This has the beneficial effect that an inevitable reflected beam portion 76 of the master beam 61 propagating into the reference body 55 is back scattered or reflected into a region that is outside the reference head 54 or which impinges the reference head 54 in a region that is outside an angle of acceptance.

In this way, it can be avoided that a light beam 76 scattered or back reflected on the boundary surface of the reference body 55 re-enters the reference head 54 and/or the optical fiber 60.

As illustrated in Fig. 6, a surface normal 71 of the first end face 69 extends non-parallel to the elongation of the reference body 55. As a consequence, the master signal beam 62 propagates non-parallel to the elongation or non-parallel to the sidewall of the reference body 55. Consequently, the end face 70 at the second end 68 must be skewed or tilted accordingly so that the reflected portion 63 of the master signal beam 62 counter-propagates with respect to the master signal beam 62.

In order to reduce a transverse width and transverse extension of the reference body 55 it is of particular benefit to arrange or to orient the reference head 54 at a certain predefined angle with respect to the elongation of the reference body 55 as illustrated in Fig. 7. There, the housing 72 of the reference head 54 comprises an aperture 73 through which the master beam 61 is directed towards and into the reference body 55. The aperture 73 is laterally confined by a frame 74. The surface normal 75 of the frame 74 and hence a cross-section of the aperture 73 extends at a predefined angle with respect to the direction of the master beam 61.

Typically, at the boundary surface of the first end face 69, the master beam 61 is subject to diffraction. The angle between the surface normal 75 and the direction of the master beam 61 as well as the angle between the surface normal 71 of the first end face 69 and the longitudinal axis of the elongated reference body 55 are adapted such that the master signal beam 62 propagates parallel to the longitudinal axis of the reference body 55 and/or parallel to the direction of a surface normal of the first reflector 56. With the embodiment as illustrated in Fig. 7, the first reflector 56 may be arranged substantially perpendicular to the longitudinal axis and hence to the elongation of the reference body 55. In this way a lateral extension of the reference body 55 perpendicular to the longitudinal direction can be reduced.

In Fig. 8 another implementation of the reference body 55 is illustrated. Here, the reference body 55 comprises a first branch 90, a second branch 92 and a third branch 94. The branches are arranged in a U-shaped manner. The first and the third branches 94 extend substantially parallel to each other whereas the second branch 92 extends substantially perpendicular to the first and third branches 90, 94. The first branch 90, the second branch 92 and the third branch 94 are formed as a unitary reference body 55. There are provided internal reflectors 91, 93 in a transition area between the first branch 90 and the second branch 92 as well as in a transition area between the second branch 92 and the third branch 94.

A remote end of the third branch 94 is provided with the first reflector 56. Hence, the remote or free end of the third branch 94 forms or constitutes the second end 68 of the reference body. An opposite end of the first branch 94 forms or constitutes the first end 76. The total elongation of the reference body 55 as illustrated in Fig. 8 along the elongation of the first branch 90 and the third branch 94 is reduced compared to the total optical path length provided by the reference body 55 extending from the first end 67 towards the second end 68.

In the flowchart of Fig. 10 numerous steps of the method of correcting a distance measurement provided by the interferometric measuring device 1 are illustrated. In a first step 100 a relative phase between the master reference beam 64 and a reflected portion 63 of the master signal beam 62 is measured. On the basis of this relative phase measurement a phase shift between the master reference beam and the reflected portion of the master signal beam can be determined. In step 102 this phase shift is measured and/or monitored over time, namely during the interferometric measurement of the object 15, 16, 17, 18. In an optional step 104 an ambient parameter, such as temperature, air pressure or humidity is measured concurrently and is monitored concurrently.

From the monitoring and measuring of the phase shift over time as provided in step 102 in step 106 a wavelength drift of the light source 2 is derived from the phase shift monitoring. In this way a precise quantitative wavelength drift can be monitored over time. In a final step 108 the measurement data as typically provided by the signal processing unit 20 can be corrected either in real time, i.e. during the interferometric measurement or in a post-processing re-calculation.

### Reference Numbers

- 1: measuring device
- 2: light source
- 3: measurement beam
- 4: reference beam
- 5: measurement head
- 6: measurement head
- 7: measurement head
- 8: measurement head
- 10: signal coupling unit
- 11: measurement stage
- 12: signal beam
- 14: beam splitter
- 15: object
- 16: object
- 17: object
- 18: object
- 20: signal processing unit
- 21: processor
- 22: data storage
- 24: detector
- 25: detector
- 50: reference unit
- 51: base
- 52: mount
- 53: mount
- 54: reference head
- 55: reference body
- 56: reflector
- 57: beam splitter
- 58: reflector
- 59: transducer
- 60: optical fiber
- 61: master beam
- 62: master signal beam
- 63: reflected beam portion
- 64: master reference beam
- 65: sidewall
- 66: interior
- 67: first end
- 68: second end
- 69: end face
- 70: end face
- 71: surface normal
- 72: housing
- 73: aperture
- 74: frame
- 75: surface normal
- 76: light beam
- 80: ambient sensor
- 82: heating and/or cooling element
- 84: control
- 85: insulation
- 86: lens
- 88: head unit
- 90: branch
- 91: internal reflector
- 92: branch
- 93: internal reflector
- 94: branch

## Claims

1. A wavelength reference unit (50) for an interferometric measuring device (1), the wavelength reference unit (50) comprising:
- an elongated light-transmissive reference body (55) comprising a first end (67) and a second end (68),
- a first reflector (56) arranged at the second end (68) and facing towards an interior (66) of the reference body (55),
- a reference head (54) configured to be coupled with a light source (2) for receiving a master beam (61) from the light source (2), the reference head (54) being configured to split the master beam (61) into a master signal beam (62) and a master reference beam (64) and to direct the master signal beam (62) towards the first end (67), wherein the reference head (54) is aligned relative to the reference body (55) such that the master signal beam (62) enters the reference body (55) at the first end (67) and propagates towards the second end (68),
- wherein the reference head (54) is configured to capture at least a portion (63) of the master signal beam (62) reflected by the first reflector (56) and to provide the reflected portion (63) of the master signal beam (62) and the master reference beam (64) to a reference detector (25).

2. The wavelength reference unit (50) according to claim 1, further comprising a base (51), wherein the reference head (54) is mounted on the base (51) by a first mount (52) and wherein the reference body (55) is mounted on the base (51) by a second mount (53).

3. The wavelength reference unit (50) according to any one of the preceding claims, wherein the reference body (55) comprises a material or is made of a material having a coefficient of thermal expansion (CTE) of less than 50 x 10⁻⁷/K, less than 40 x 10⁻⁷/K, less than 30 x 10⁻⁷/K, less than 20 x 10⁻⁷/K, less than 13 x 10⁻⁷/K, less than 8 x 10⁻⁷/K, less than 6 x 10⁻⁷/K, less than 5 x 10⁻⁷/K, less than 2 x 10⁻⁷/K, less than 1 x 10⁻⁷/K, less than 0.5 x 10⁻⁷/K, or less than 0.1 x 10⁻⁷/K at 20°C.

4. The wavelength reference unit (50) according to any one of the preceding claims, wherein a longitudinal distance between the first end (67) and the second end (68) of the reference body (55) is larger than 10,000 WL, larger than 100,000 WL or larger than 1,000,000 WL, wherein WL is the wavelength of the master beam (62).

5. The wavelength reference unit (50) according to any one of the preceding claims, wherein the reference body (55) comprises a solid body or a hollow body made of one of the following materials: a borosilicate glass, Invar, a fused quartz, a glass ceramic material, a lithium-aluminosilicate glass ceramic material.

6. The wavelength reference unit (50) according to any one of the preceding claims, wherein the reference head (54) is attached and/or fixed to the first end (67) of the reference body (55).

7. The wavelength reference unit (50) according to any one of the preceding claims, wherein the first end (67) of the reference body (55) comprises a first end face (69) with a surface normal (71) extending at a predefined angle relative to the elongation of the elongated reference body (54).

8. The wavelength reference unit (50) according to any one of the preceding claims 2 to 7, wherein the base (51) comprises a housing (72) with an aperture (73) for the master beam (62), wherein the aperture (73) is enclosed by a frame (74) and wherein a surface normal of the frame (74) extends at a predefined angle relative to the propagation direction of the master beam (62).

9. The wavelength reference unit (50) according to claim 7 and 8, wherein the first end face (69) of the reference body (55) is attached and/or fixed to the frame (74).

10. The wavelength reference unit (50) according to any one of the preceding claims, further comprising at least one sensor (80) to quantitatively measure at least one ambient parameter, wherein the ambient parameter is one of ambient temperature, ambient air pressure or ambient humidity.

11. The wavelength reference unit (50) according to any one of the preceding claims, further comprising at least one heating and/or cooling element (82) thermally coupled to the reference body (55).

12. An interferometric measuring device (1), comprising:
- a light source (2) configured to generate a measurement beam (3),
- a beam splitter (14) to split the measurement beam (3) into a reference beam (4), a signal beam (12) and a master beam (61),
- at least one sensor head (5, 6, 7, 8) coupled to the light source (2) and configured to direct the signal beam (12) towards an object (15, 16, 17, 18) and to capture a portion of the signal beam (12) reflected from the object (15, 16, 17, 18),
- at least a first signal detector (24) coupled to the at least one sensor head (5, 6, 7, 8) and provided with the reference beam (4) and the captured portion of the signal beam (12),
- a reference detector (25), provided with the reference beam (4) or with a master reference beam (61),
- a reference unit (50) according to any one of the preceding claims, wherein the reference head (55) of the reference unit (50) is coupled to the light source (2) and is coupled to the reference detector (25) to provide the reflected portion (63) of the master signal beam (62) and the master reference beam (64) to the reference detector (25).

13. The interferometric measuring device (1) according to claim 12, further comprising a signal processing unit (20) connected to the first signal detector (24) and connected to the reference detector (25),
- wherein the signal processing unit (20) is configured to determine a distance between the at least one sensor head (5, 6, 7, 8) and an object (15, 16, 17, 18) on the basis of an interference between the captured portion of the signal beam (12) and the reference beam (4), and
- wherein the signal processing unit (20) is configured to adjust the distance on the basis of an interference between the reflected portion (63) of the master signal beam (62) and the master reference beam (64).

14. A method of correcting a distance measurement provided by an interferometric measuring device (1), wherein the interferometric measuring device (1) comprises a light source (2) and wherein the interferometric measuring device (1) is configured to determine a distance to an object (15, 16, 17, 18) on the basis of an interference measurable by a signal detector (24) between a signal beam (12) reflected from the object (15, 16, 17, 18) and a reference beam (4), wherein the reference beam (4) and the signal beam (12) emanate from the light source (2), the method comprises the step of:
- providing a master beam (61) from the light source (2),
- splitting the master beam (61) into a master signal beam (62) and a master reference beam (64),
- directing the master signal beam (62) towards a first end (67) of an elongated light-transmissive reference body (55) comprising the first end (67) and comprising a second end (68) and aligning the master signal beam (62) such that the master signal beam (62) enters the reference body (55) at the first end (67) and propagates towards the second end (68), wherein a first reflector (56) is arranged at the second end (68) and faces towards an interior (66) of the reference body (55),
- capturing at least a portion (63) of the master signal beam (62) reflected by the first reflector (56),
- providing the reflected portion (63) of the master signal beam (62) and the master reference beam (64) to a reference detector (25),
- generating an interference pattern of the master reference beam (64) and the reflected portion (63) of the master signal beam (62) and monitoring a phase shift between the reflected portion (63) of the master signal beam (62) and the master reference beam (64) over time,
- deriving of a wavelength drift of the light source (2) on the basis of the phase shift,
- calculating a corrected distance to the object (15, 16, 15, 18) taking into account the wavelength drift of the light source (2).

15. The method according to claim 14, further comprising measuring of at least one of the following ambient parameters: temperature, air pressure and humidity, and deriving the wavelength drift on the basis of the measured ambient parameter.
